# EUROPÄISCHE PATENTSCHRIFT

(11) **EP 1 751 345 B1**
(45) Veröffentlichungstag und Bekanntmachung des Hinweises auf die Patenterteilung: **09.04.2008**
(21) Anmeldenummer: 05744538.9
(22) Anmeldetag: 17.05.2005
(51) Int. Cl.: D06M 15/277, D06M 15/256, D06M 13/328, D06M 13/256, D06M 11/79, C08K 3/36

(54) **VERFAHREN ZUR AUSRÜSTUNG VON SAUGFÄHIGEN MATERIALIEN**
METHOD FOR FINISHING ABSORBENT MATERIALS
PROCÉDÉ DE FINISSAGE DE MATIÈRES ABSORBANTES

(30) Priorität: 19.05.2004 DE 102004025367; 22.07.2004 DE 102004035654
(43) Veröffentlichungstag der Anmeldung: 14.02.2007
(73) Patentinhaber: BASF SE, 67056 Ludwigshafen (DE)
(72) Erfinder: DIELEMAN, Cedric, F-67630 Scheibenhard (FR); KELLER, Harald, 67069 Ludwigshafen (DE); EBENAU, Axel, 67117 Limburgerhof (DE); REICHERT, Jürgen, 67117 Limburgerhof (DE)
(86) Internationale Anmeldenummer: PCT/EP2005/005347
(87) Internationale Veröffentlichungsnummer: WO 2005/113883

(56) Entgegenhaltungen:
- EP-A- 1 283 296
- WO-A-20/04074568
- US-A- 3 126 355
- US-A- 5 888 290
- PATENT ABSTRACTS OF JAPAN Bd. 009, Nr. 021 (C-263), 29. Januar 1985 (1985-01-29) & JP 59 170170 A (KANSAI PAINT KK), 26. September 1984 (1984-09-26)

## Beschreibung

Die vorliegende Erfindung betrifft ein Verfahren zur Ausrüstung von saugfähigen Materialien durch Behandlung mit mindestens einer wässrigen Flotte, die mindestens ein organisches Polymer enthält gewählt aus Polymeren und Copolymeren von ethylenisch ungesättigten hydrophoben Monomeren, die in Wasser eine Löslichkeit von weniger als 1 g/l haben, bestimmt bei 25°C,
mindestens einen organischen oder anorganischen Feststoff in partikulärer Form gewählt aus Polyethylen, Polypropylen, Polyisobutylen und Polystyrol sowie Copolymere derselben miteinander oder mit einem oder mehreren weiteren Olefinen und festen anorganischen Oxiden, Carbonaten, Phosphaten, Silikaten oder Sulfaten der Gruppe 3 bis 14 des Periodensystems der Elemente,
und
mindestens einen Emulgator, gewählt aus Emulgatoren der allgemeinen Formel I 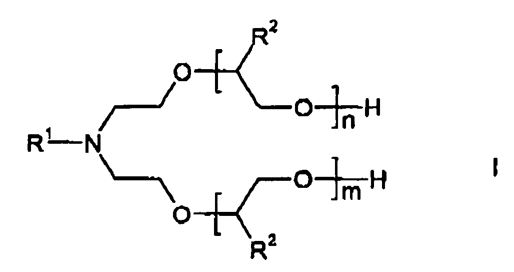 und II, 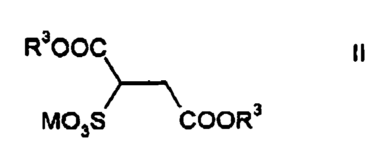 wobei die Variablen wie folgt definiert sind:
- R¹: gewählt aus C₆-C₄₀-Alkyl und C₃-C₄₀-Alkenyl mit einer bis fünf C-C-Doppelbindungen,
- R²: gleich oder verschieden und gewählt aus Wasserstoff und Methyl,
- m, n: gleich oder verschieden und gewählt aus ganzen Zahlen im Bereich von 0 bis 10,
- R³: gleich oder verschieden und gewählt aus Wasserstoff und C₈-C₂₀-Alkyl,
- M: Alkalimetall oder Ammonium,

Die Ausrüstung von Textilien ist ein Arbeitsgebiet mit wachsender wirtschaftlicher Bedeutung, Besonders interessant ist es, Textilien wasser- und schmutzabweisend auszurüsten. Moderne Maßnahmen bedienen sich in einigen Fällen des sogenannten Lotus-Effekts® und verleihen Textilien durch das Aufbringen einer rauen Oberfläche ein wasserabweisendes Verhalten.

WO 96/04123 beschreibt selbstreinigende Oberflächen, die eine künstliche Oberflächenstruktur besitzen, welche Erhebungen und Vertiefungen aufweist, wobei die Struktur insbesondere durch ihre Strukturparameter gekennzeichnet ist. Die Herstellung der Strukturen erfolgt beispielsweise durch Aufprägen einer Struktur auf ein thermoplas tisch verformbares hydrophobes Material oder durch Aufbringen von Teflonpulver auf eine mit UHU® behandelte Fläche. Aus US 3,354,022 sind ähnlich hergestellte Wasser abweisende Flächen bekannt.

Aus EP-A 0 933 388 sind Verfahren zur Herstellung von strukturierten Oberflächen bekannt, bei denen man zunächst durch Photolithographie eine Negativform herstellt, mit dieser Form eine Kunststofffolie prägt und anschließend die geprägte Kunststofffolie mit fluorierten Alkylsilanen hydrophobiert.

Die oben beschriebenen Methoden sind jedoch zur Schmutz und Wasser abweisenden Ausrüstung von Textilien ungeeignet.

In WO 02/84013 wird vorgeschlagen, Fasern beispielsweise aus Polyester dadurch zu hydrophobieren, dass man sie durch ein auf 80°C erhitztes Bad aus Decalin, in dem 1 % hydrophobiertes Kieselgel Aerosil 8200 suspendiert wurde, hindurchzieht.

In WO 02/84016 wird vorgeschlagen, Polyestergewebe dadurch zu hydrophobieren, dass man es durch ein Bad aus auf 50°C erwärmtes DMSO (Dimethylsulfoxid), in dem 1 % hydrophobiertes Kieselgel Aeroperl 8200 suspendiert wurde, hindurchzieht.

Beiden Methoden zur Hydrophobierung ist gemeinsam, dass das Lösemittel so gewählt wird, dass die Fasern partiell gelöst werden. Dazu ist es erforderlich, dass man große Mengen an organischem Lösemittel einsetzt, was in vielen Fällen unerwünscht ist. Außerdem kann durch Behandlung mit organischen Lösemitteln die mechanische Festigkeit der Fasern beeinflusst werden.

US 5,888,290 offenbart in den Beispielen Mischungen zur Behandlung von beispielsweise Teppichen, die ein Polymer-gepfropftes Kieselgel und optional Dioctylsulfosuccinat. Die Polymer-gepfropften Kieselgele aus US 5,888,290 sind jeweils ausschließlich (Beispiele 1 bis 8) oder überwiegend mit Methacrylsäure gepfropft und deshalb nicht hydrophobiert. Die Behandlung mit Fluorchemikalien erfolgt in einem separaten Schritt.

In WO 01/75216 wird vorgeschlagen, textile Fasern und Flächengebilde dadurch Wasser und Schmutz abweisend auszurüsten, dass man sie mit einer Zwei-Komponenten-Schicht versieht, von denen eine ein Dispersionsmittel und die andere beispielsweise ein Kolloid ist. Durch das in WO 01/75216 beschriebene Ausrüstungsverfahren werden Ausrüstungsschichten hergestellt, bei denen die Kolloide anisotrop im Dispersionsmittel verteilt sind, wobei man eine Anreicherung der Kolloide an der Grenzfläche zwischen Ausrüstungsschicht und umgebender Oberfläche beobachtet. Das Verfahren wendet dabei solche Ausrüstungsflotten an, die bis zu 5 g/l Aerosil 812 S enthalten.

Durch das in WO 01/75216 beschriebene Verfahren ausgerüstete Textilien weisen jedoch in vielen Fällen eine nicht zufrieden stellende mechanische Belastbarkeit auf.

Es bestand daher die Aufgabe, ein Verfahren zur Ausrüstung von saugfähigen Materialien zur Verfügung zu stellen, das die oben aufgezeigten Nachteile nicht aufweist und gleichzeitig sehr gute Wasser- und Schmutz abweisende Wirkung aufweist. Es bestand weiterhin die Aufgabe, Schmutz und Wasser abweisende Textilien bereitzustellen. Weiterhin bestand die Aufgabe, Flotten zur Schutz und Wasser abweisenden Ausrüstung von saugfähigen Materialien zur Verfügung zu stellen.

Demgemäß wurde das eingangs definierte Verfahren gefunden.

Unter saugfähigen Materialien sind im Sinne der vorliegenden Erfindung beispielsweise Papier, Pappe, Holz, Baustoffe wie beispielsweise Ziegel, Beton, Naturstein, Sandstein und Kalksandstein, weiterhin Lederimitate und Leder und bevorzugt textile Materialien zu verstehen. Unter textilen Materialien sind beispielsweise Fasern, Vorgarn, Garn, Zwirn einerseits und textile Flächengebilde andererseits wie beispielsweise Webwaren, Maschenwaren, Vliese und Bekleidungsstücke zu verstehen. Besonders bevorzugt sind Flächengebilde, die beispielsweise zur Herstellung von Textil im Außenbereich verwendet werden. Beispielhaft seien Segel, Sonnen- und Regenschirme, Planen, Zeltbahnen, Tischdecken, Markisenstoffe und Möbelbespannungen beispielsweise für Stühle, Schaukeln oder Bänke genannt.

Saugfähige Materialien im Sinne der vorliegenden Erfindung können aus unterschiedlichen Stoffen bestehen. Genannt seien Naturfasern und Synthesefasern sowie Mischfasern. Unter Naturfasern seien beispielsweise Seide, Wolle und Baumwolle genannt. Unter Synthesefasern seien beispielhaft Polyamid, Polyester, Polypropylen, Polyacrylnitril, Polyethylenterephthalat und Viskose genannt. Auch modifizierte Naturfasern lassen sich nach dem erfindungsgemäßen Verfahren beschichten, beispielsweise Celluloseacetat.

Das erfindungsgemäße Verfahren geht aus von mindestens einer wässrigen Flotte. Unter wässriger Flotte im Sinne der vorliegenden Erfindung sind solche Flotten zu verstehen, die, bezogen auf bei Zimmertemperatur flüssige Anteile, mindestens 5 Gew.-% Wasser enthalten können. Bevorzugt enthalten wässrige Flotten mindestens 25 Gew.-% Wasser, besonders bevorzugt mindestens 50 Gew.-% und ganz besonders bevorzugt mindestens 75 Gew.-%. Der maximale Wassergehalt, bezogen auf bei Zimmertemperatur flüssige Anteile, beträgt 100 Gew.-%, bevorzugt 97 Gew.-%, besonders bevorzugt 95 Gew.-%.

Erfindungsgemäß eingesetzte wässrige Flotten können neben Wasser organische Lösemittel enthalten, beispielsweise Methanol, Ethanol, Isopropanol, Aceton, Methylethylketon, Methylisobutylketon, Ethylenglykol-mono-n-Butylether, Ethylenglykol-monoiso-Butylether, Essigsäure, n-Butanol, iso-Butanol, n-Hexanol und Isomere, n-Octanol und Isomere, n-Dodecanol und Isomere. Organische Lösemittel können 0,2 bis 50 Gew.-%, bevorzugt 0,5 bis 35 Gew.-% der erfindungsgemäß eingesetzten wässrigen Flotte ausmachen. Wässrige Flotten mit einem Wassergehalt an 100 Gew.-%, bezogen auf bei Zimmertemperatur flüssige Anteile, enthalten dementsprechend keine organischen Lösemittel.

Mindestens eine der im erfindungsgemäßen Verfahren eingesetzten Flotten enthält mindestens ein organisches Polymer. Organische Polymere können als Bindemittel dienen. Die Wirkung eines Bindemittels kann beispielsweise dergestalt erfolgen, dass das organische Polymer einen Film bildet und die Partikel miteinander und mit dem zu beschichtenden saugfähigen und bevorzugt textilen Material verbindet.

In einer Ausführungsform der vorliegenden Erfindung handelt es sich bei mindestens einem organischen Polymeren um Polymere oder Copolymere von ethylenisch ungesättigten hydrophoben Monomeren, die in Wasser eine Löslichkeit von weniger als 1 g/l haben, bestimmt bei 25°C. In Copolymeren machen hydrophobe Monomere mindestens 50 Gew.-%, bevorzugt mindestens 75 Gew.-% des Copolymers aus.

Bevorzugte Monomere sind gewählt aus den Gruppen der C₂-C₂₄-Olefine, insbesondere α-Olefine mit 2 bis 24 C-Atomen, beispielsweise Ethylen, Propylen, 1-Buten, Isobuten, 1-Hexen, 1-Octen, 1-Decen, 1-Dodecen, 1-Hexadecen oder 1-Octadecen;
Vinylaromaten, beispielsweise Styrol, α-Methylstyrol, cis-Stilben, trans-Stilben, Diolefine wie beispielsweise 1,3-Butadien, Cyclopentadien, Chloropren oder Isopren, C₅-C₁₈-Cycloolefine wie beispielsweise Cyclopenten, Cyclohexen, Norbornen, dimeres Cyclopentadien,
Vinylester von linearen oder verzweigten C₁-C₂₀-Alkancarbonsäuren wie beispielsweise Vinylacetat, Vinylpropionat, Vinyl-n-butyrat, Vinyl-n-hexanoat, Vinyl-n-octanoat, Vinyllaurat und Vinylstearat,
(Meth)acrylsäureester von C₁-C₂₀-Alkoholen, beispielsweise Methyl(meth)acrylat, Ethyl(meth)acrylat, n-Propyl(meth)acrylat, iso-Propyl(meth)acrylat, n-Butyl(meth)-acrylat, iso-Butyl(meth)acrylat), tert.-Butyl(meth)acrylat, 2-Ethylhexyl(meth)acrylat, n-Octyl(meth)acrylat, n-Decyl(meth)acrylat, n-Dodecyl(meth)acrylat, n-Eicosyl-(meth)acrylat
und ganz besonders bevorzugt aus den Gruppen der halogenierten Monomere und der Monomere mit Siloxangruppen.

Zu halogenierten Monomeren gehören chlorierte Olefine wie beispielsweise Vinylchlorid und Vinylidenchlorid.

Ganz besonders bevorzugte halogenierte Monomere sind fluorhaltige Olefine wie beispielsweise Vinylidenfluorid, Trifluorchlorethylen, Tetrafluorethylen, Hexafluorpropylen, Vinylester von fluorierten oder perfluorierten C₃-C₁₁-Carbonsäuren wie beispielsweise in US 2,592,069 und US 2,732,370 beschrieben (Meth)acrylsäureester von fluorierten oder perfluorierten Alkoholen wie beispielsweise fluorierten oder perfluorierten C₃-C₁₄-Alkylalkoholen, beispielsweise (Meth)acrylatsäureeester von HO-CH₂-CH₂-CF₃, HO-CH₂-CH₂-C₂F₅, HO-CH₂-CH₂-n-C₃F₇, HO-CH₂-CH₂-iso-C₃F₇, HO-CH₂-CH₂-n-C₄F₉, HO-CH₂-CH₂-n-C₆F₁₃, HO-CH₂-CH₂-n-C₈F₁₇, HO-CH₂-CH₂-n-C₁₀F₂₁, HO-CH₂-CH₂-n-C₁₂F₂₅,
beschrieben beispielsweise in US 2,642,416, US 3,239,557, BR 1,118,007, US 3,462,296.

Auch Copolymere von beispielsweise Gycidyl(meth)acrylat mit Estern der Formel III 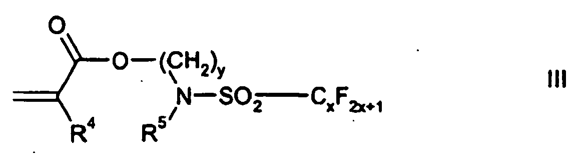 in denen die Variablen wie folgt definiert sind:
- R⁴: Wasserstoff, CH₃, C₂H₅,
- R⁵: CH₃, C₂H₅,
- x: eine ganze Zahl im Bereich von 4 bis 12, ganz besonders bevorzugt 6 bis 8
- y: eine ganze Zahl im Bereich von 1 bis 11, bevorzugt 1 bis 6,
oder Glycidy(meth)acrylat mit Vinylestern von fluorierten Carbonsäuren sind geeignet.

Weitere geeignete Copolymere sind Copolymerisate von (Meth)acrylsäureestem fluorierter oder perfluorierter C₃-C₁₂-Alkylalkohole wie beispielsweise HO-CH₂-CH₂-CF₃, HO-CH₂-CH₂-C₂F₅, HO-CH₂-CH₂-n-C₃F₇, HO-CH₂-CH₂-iso-C₃F₇, HO-CH₂-CH₂-n-C₄F₉, HO-CH₂-CH₂-n-C₅F₁₁, HO-CH₂-CH₂-n-C₆F₁₃, HO-CH₂-CH₂-n-C₇F₁₅;
mit (Meth)acrylsäureestem nicht-halogenierter C₁-C₂₀-Alkohole, beispielsweise Methyl(meth)acrylat, Ethyl(meth)acrylat, n-Butyl(meth)acrylat, n-Propyl(meth)acrylat, 2-Ethylhexyl(meth)acrylat, n-Octyl(meth)acrylat, n-Decyl(meth)acrylat, n-Dodecyl-(meth)acrylat, n-Eicosyl(meth)acrylat.

Eine Übersicht über geeignete fluorierte Polymere und Copolymere findet sich beispielsweise in M. Lewin et al., Chemical Processing of Fibers and Fabrics, Part B, 2. Band, Marcel Dekker, New York (1984), Seite S. 172 ff. und S. 178 - 182.

Weitere geeignete fluorierte Polymere sind beispielsweise in DE 199 120 810 offengelegt.

Aus der Gruppe der Olefine mit Siloxangruppen seien Olefine der allgemeinen Formeln IV a bis IV c 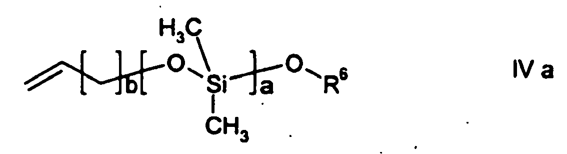 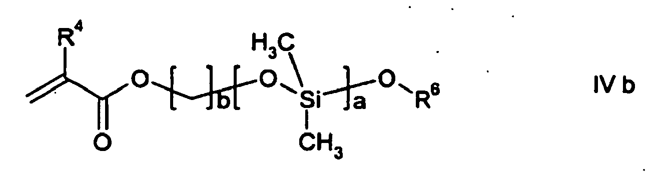 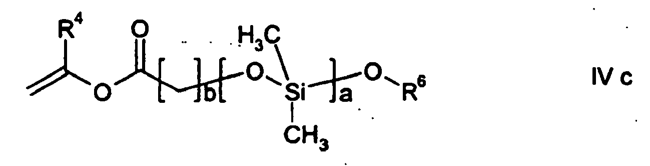 genannt, in denen die Variablen wie folgt definiert sind:
R⁶ ist gewählt aus
   C₁-C₁₈-Alkyl, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, n-Dodecyl, n-Tetradecyl, n-Hexadecyl, n-Octadecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl und ganz besonders Methyl.
   C₆-C₁₄-Aryl, beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl C₃-C₁₂-Cycloalkyl, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl oder Si(CH₃)₃.
a ist eine ganze Zahl im Bereich von 2 bis 10.000, insbesondere bis 100.
b ist eine ganze Zahl im Bereich von 0 bis 6, insbesondere 1 bis 2;
Weiterhin sind geeignete organische Polymere: Polyether wie beispielsweise Polyethylenglykol, Polypropylenglykol, Polybutylenglykole, Polytetrahydrofuran; Polycaprolacton, Polycarbonate, Polyvinylbutyral, teilaromatische Polyester aus aliphatischen oder aromatischen Dicarbonsäuren und/oder aliphatischen oder aromatischen Dialkoholen, z.B. Polyester, aufgebaut aus aliphatischen Dialkoholen mit 2 bis 18 C-Atomen wie beispielsweise Ethylenglykol, Propandiol, 1,4-Butandiol, 1,6-Hexandiol, 1,8-Octandiol oder Bisphenol A, und aliphatischen Dicarbonsäuren mit 3 bis 18 C-Atomen wie beispielsweise Bernsteinsäure, Glutarsäure, Adipinsäure und α,ω-Decandicarbonsäure; Polyester, aufgebaut aus Terephthalsäure und aliphatischen Dialkoholen mit 2 bis 18 C-Atomen wie beispielsweise Ethylenglykol, Propandiol, 1,4-Butandiol, 1,6-Hexandiol oder 1,8-Octandiol.

Vorstehend genannte Polyester können beispielsweise mit Monoalkoholen wie beispielsweise 4 bis 12 C-Atomen terminiert sein, beispielsweise n-Butanol, n-Hexanol, n-Octanol, n-Decanol oder n-Dodecanol.

Vorstehend genannte Polyester können beispielsweise mit Monocarbonsäuren wie beispielsweise Stearinsäure terminiert sein.

Weitere geeignete Polymere sind Melamin-Formaldehyd-Harze, Harnstoff-Formaldehyd-Harze, N,N-Dimethylol-4,5-dihydroxyethylenharnstoffe, die mit C₁-C₅-Alkoholen verethert sein können.

Das Molekulargewicht des oder der organischen Polymeren lässt sich in weiten Bereichen wählen. Das Molekulargewicht M_{w} (Gewichtsmittel) kann im Bereich von 1000 bis 10.000.000 g/mol, vorzugsweise im Bereich von 2500 bis 5.000.000 g/mol liegen, ermittelt nach mindestens einer der folgenden Methoden: Lichtstreuung, Gelpermeationschromatographie (GPC), Viskosimetrie. Wenn man ein Polymer aus der Gruppe der Polyolefine einsetzt, beispielsweise Polyethylen, Polypropylen oder Polyisobuten sowie Copolymere von Ethylen mit Propylen, Butylen oder 1-Hexen, so liegt das Molekulargewicht vorteilhaft im Bereich von 30.000 bis 5.000.000 g/mol.

Die Breite der Molekulargewichtsverteilung ist an sich unkritisch und kann im Bereich von 1,1 bis 20 liegen. Üblicherweise liegt sie im Bereich von 2 bis 10.

In einer Ausführungsform der vorliegenden Erfindung kann der Anteil des oder der oben beschriebenen organischen Polymere bei mindestens 0,1 g/l der wässrigen Flotte liegen, bevorzugt mindestens 1 g/l und besonders bevorzugt bei mindestens 10 g/l. Der maximale Anteil liegt beispielsweise bei 500 g/l, bevorzugt bei 250 g/l und besonders bevorzugt bei 100 g/l. In einer Ausführungsform der vorliegenden Erfindung ist das oder die organischen Polymere in der wässrigen Flotte nicht löslich, wobei nicht löslich im Zusammenhang mit organischen Polymeren im Sinne der vorliegenden Erfindung bedeutet, dass bei Zimmertemperatur weniger als 1 g/l in der Flotte löslich sind, bevorzugt weniger als 0,1 g/l.

In einer Ausführungsform der vorliegenden Erfindung setzt man mindestens zwei verschiedene organische Polymere ein.

In einer Ausführungsform der vorliegenden Erfindung kann mindestens ein organisches Polymer in Form von Partikeln mit einem mittleren Korndurchmesser von 0,1 bis 50 µm, bevorzugt 0,5 bis 30 µm und besonders bevorzugt bis 20 µm vorliegen (Medianwert, Zahlenmittel).

Mindestens eine der im erfindungsgemäßen Verfahren eingesetzte wässrige Flotte enthält einen organischen oder anorganischen Feststoff in partikulärer Form, der von dem oder den oben beschriebenen Polymeren verschieden ist, beispielsweise in einem Anteil von mindestens 5,5 g/l, bevorzugt mindestens 7 g/l, besonders bevorzugt mindestens 10 g/l. Der maximale Anteil kann bei etwa 150 g/l liegen. Der weitere Feststoff kann anorganischer oder organischer Natur sein, bevorzugt ist er anorganisch.

Beispiele für geeignete anorganische oder organische Feststoffe sind Polyethylen, Polypropylen, Polyisobutylen und Polystyrol sowie Copolymere derselben miteinander oder mit einem oder mehreren weiteren Olefinen wie beispielsweise Styrol, Methylacrylat, Ethylacrylat, Methylmethacrylat, Butylacrylat, Butylmethacrylat, 2-Ethylhexylacrylat, 2-Ethylhexylmethacrylat, Maleinsäureanhydrid oder N-Methylmaleinimid. Ein bevorzugtes Polyethylen oder Polypropylen wird beispielsweise in EP-A 0 761 696 beschrieben.

Besonders geeignete anorganische oder organische Feststoffe sind anorganische Materialien, insbesondere feste anorganische Oxide, Carbonate, Phosphate, Silikate oder Sulfate der Gruppen 3 bis 14 des Periodensystems der Elemente, beispielsweise Calciumoxid, Siliziumdioxid oder Aluminiumoxid, Calciumcarbonat, Calciumsulfat oder Calciumsilikat, wobei Aluminiumoxid und Siliziumdioxid bevorzugt sind. Besonders bevorzugt ist Siliziumdioxid in seiner Modifikation als Kieselgel. Ganz besonders bevorzugt sind pyrogene Kieselgele. Feste anorganische Oxide können thermisch durch Erhitzen auf 400 bis 800°C oder bevorzugt durch physisorbierte oder chemisorbierte organische oder metallorganische Verbindungen hydrophobiert werden. Dazu setzt man Partikel vor dem Beschichtungsschritt beispielsweise mit metallorganischen Verbindungen um, die wenigstens eine funktionelle Gruppe enthalten, beispielsweise Alkyl-Lithiumverbindungen wie Methyllithium, n-Butylithium oder n-Hexyllithium; oder Silane wie beispielsweise Hexamethyldisilazan, Octyltrimethoxysilan und insbesondere halogenierte Silane wie Trimethylchlorsilan oder Dichlordimethylsilan.

In einer Ausführungsform der vorliegenden Erfindung setzt man eine Mischung von hydrophobiertem festem anorganischen Oxid mit korrespondierendem nichthydrophobiertem anorganischen Oxid ein, beispielsweise in Gewichtsanteilen von 100 : 0 bis 0:1 00 bevorzugt 99 : 1 bis 60 : 40, besonders bevorzugt 99 : 1 bis 80 : 20.

Mindestens ein organischer oder anorganischer Feststoff ist vorzugsweise hydrophob. Unter hydrophob wird im Sinne der vorliegenden Erfindung verstanden, dass seine Löslichkeit in Wasser unter 1 g/l liegt, bevorzugt unter 0,3 g/l, bestimmt bei Zimmertemperatur.

Anorganische Feststoffe können vorzugsweise poröser Natur sein. Die poröse Struktur lässt sich am besten durch die BET-Oberfläche, gemessen nach DIN 66131, charakterisieren. Eingesetzte anorganische Feststoffe können bevorzugt eine BET-Oberfläche im Bereich von 5 bis 1000 m²/g, bevorzugt von 10 bis 800 m²/g und besonders bevorzugt von 20 bis 500 m²/g.

In einer Ausführungsform der vorliegenden Erfindung liegt mindestens einer der anorganischen oder organischen Feststoffe in partikulärer Form vor. Der mittlere Partikeldurchmesser (Medianwert, Zahlenmittel) liegt bei mindestens 1 nm, bevorzugt mindestens 3 nm und besonders bevorzugt mindestens 6 nm. Der maximale Partikeldurchmesser (Medianwert, Zahlenmittel) liegt bei 1000 nm, bevorzugt bei 350 nm und besonders bevorzugt bei 100 nm. Zur Messung des Partikeldurchmessers kann man sich gängiger Methoden bedienen wie beispielsweise Transmissionselektronenmikroskopie.

Das Gewichtsverhältnis organisches Polymer zu organischem oder anorganischem Feststoff in partikulärer Form beträgt im Allgemeinen 9:1 bis 1:9, bevorzugt 4:1 bis 1.4 und besonders bevorzugt 7:3 bis 4:6.

In einer Ausführungsform der vorliegenden Erfindung liegt mindestens einer der anorganischen oder organischen Feststoffe in Form sphärischer Partikel vor, wobei damit solche partikuläre Feststoffe umfasst sein sollen, von denen mindestens 75 Gew.-%, bevorzugt mindestens 90 Gew.-% in sphärischer Form vorliegen und weitere Partikel in granulärer Form vorliegen können.

In einer Ausführungsform der vorliegenden Erfindung kann mindestens einer der anorganischen oder organischen Feststoffe Aggregate und/oder Agglomerate bilden. Beim Vorliegen eines oder mehrerer anorganischen oder organischen Feststoffe in Form von Aggregaten und/oder Agglomeraten, die aus 2 bis mehreren tausend Primärpartikeln bestehen können und ihrerseits sphärische Form aufweisen können, beziehen sich die Angaben auf Form und Größe der Partikel auf die Primärpartikel.

Mindestens eine im erfindungsgemäßen Verfahren eingesetzte Flotte enthält mindestens einen Emulgator, gewählt aus Emulgatoren der allgemeinen Formel I 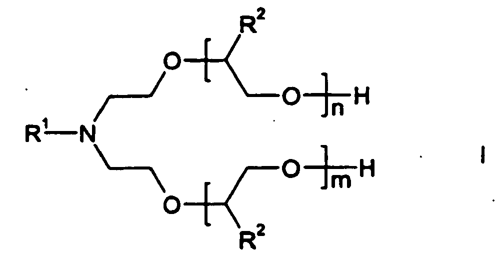 und II, 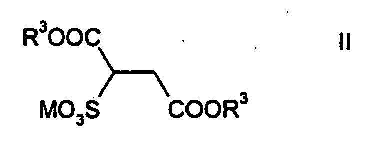 in denen die Variablen wie folgt definiert sind:
- R¹: gewählt aus C₆-C₄₀-Alkyl, beispielsweise n-Hexyl, iso-Hexyl, n-Heptyl, iso-Heptyl, n-Octyl, iso-Octyl, n-Nonyl, n-Decyl, iso-Decyl, n-Undecyl, n-Dodecyl, iso-Dodecyl, n-Tridecyl, n-Tetradecyl, iso-Tetradecyl, n-Pentadecyl, n-Hexadecyl, n-Octadecyl, n-Eicosyl, n-C₃₀H₈₁, n-C₄₀H₈₁, C₃-C₄₀-Alkenyl mit einer bis fünf C-C-Doppelbindungen, wobei die C-C-Doppelbindungen beispielsweise isoliert oder konjugiert sein können. Beispielhaft seien genannt: Allyl, -(CH₂)₂-CH=CH₂, all-*cis*-(CH₂)₈-(CH=CH-CH₂)₃CH₃, all-*cis-*(CH₂)₈-(CH=CH-CH₂)₂(CH₂)₄CH₃, all-*cis*-(CH₂)₈-CH=CH-(CH₂)₇CH₃,
- R²: gleich oder verschieden und gewählt aus Wasserstoff und Methyl, bevorzugt Methyl,
- m, n: gleich oder verschieden und gewählt aus ganzen Zahlen im Bereich von 0 bis 10, bevorzugt 1 oder 2 und besonders bevorzugt 2,
- R³: gleich oder verschieden und gewählt aus Wasserstoff und C₆-C₂₀-Alkyl, beispielsweise n-Hexyl, iso-Hexyl, n-Heptyl, iso-Heptyl, n-Octyl, iso-Octyl, n-Nonyl, n-Decyl, iso-Decyl, n-Undecyl, n-Dodecyl, iso-Dodecyl, n-Tridecyl, n-Tetradecyl, iso-Tetradecyl, n-Pentadecyl, n-Hexadecyl, n-Octadecyl, n-Eicosyl;
- M: Alkalimetall oder Ammonium.

Der Anteil an Emulgator lässt sich in weiten Grenzen wählen und kann 0,1 bis 200 g/l betragen, bevorzugt 0,2 bis 100 g/l 8und besonders bevorzugt bis 50 g/l wässriger Flotte.

Im erfindungsgemäßen Verfahren eingesetzten wässrigen Flotten kann man zur Einstellung der Viskosität einen oder mehrere Verdicker zusetzen, die beispielsweise natürlichen oder synthetischen Ursprungs sein können. Geeignete synthetische Verdicker sind Poly(meth)acylverbindungen, Polycarbonsäuren, Polyether, Polyimine, Polyamide und Polyurethane, insbesondere Copolymere mit 85 bis 95 Gew.-% Acrylsäure, 4 bis 14 Gew.-% Acrylamid und etwa 0,01 bis 1 Gew.-% des (Meth)acrylamidderivats der Formel V 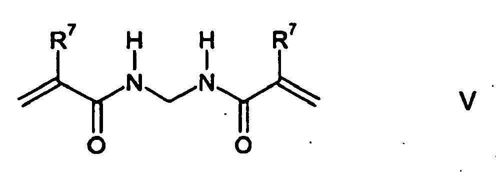 mit Molekulargewichten M_{w} im Bereich von 100.000 bis 200.000 g/mol, in denen R⁷ für Methyl oder vorzugsweise Wasserstoff steht. Als Beispiele für Verdicker natürliche Ursprungs seien genannt: Agar-Agar, Carrageen, modifizierte Stärke und modifizierte Cellulose.

Man kann beispielsweise 0 bis 10 Gew.-%, bezogen auf im erfindungsgemäßen Verfahren eingesetzte Flotte, an Verdicker einsetzen, bevorzugt 0,05 bis 5 Gew.-% und besonders bevorzugt 0,1 bis 3 Gew.-%.

Vorzugsweise haben im erfindungsgemäßen Verfahren eingesetzte Flotten bei Zimmertemperatur eine dynamische Viskosität im Bereich von 1 bis 5000 mPa·s, bevorzugt 2 bis 4000 mPa·s und besonders bevorzugt 5 bis 2000 mPa·s, gemessen beispielsweise mit einem Brookfield-Viskosimeter nach ASTM D2196-81.

Das erfindungsgemäße Verfahren führt man so durch, dass man saugfähiges Material mit mindestens einer wässrigen Flotte behandelt. Dabei ist es auch möglich, mehrere Behandlungsschritte mit gleichartigen oder verschiedenen wässrigen Flotten durchzuführen.

In einer Ausführungsform der vorliegenden Erfindung führt man das erfindungsgemäße Verfahren so durch, dass man zu behandelndes saugfähiges Material und insbesondere Textil zunächst mit einer wässrigen Flotte behandelt, die mindestens ein organisches Polymer enthält und weiterhin einen organischen oder bevorzugt anorganischen Feststoff in partikulärer Form und mindestens einen Emulgator der allgemeinen Formel I oder II und anschließend eine weitere Behandlung mit einer neuen wässrigen Flotte anschließt, die organisches Polymer enthält, aber keinen weiteren organischen oder anorganischen Feststoff in partikulärer Form.

In einer Ausführungsform der vorliegenden Erfindung führt man das erfindungsgemäße Verfahren so durch, dass man zu behandelndes saugfähiges Material und insbesondere Textil zunächst mit einer wässrigen Flotte behandelt, die mindestens ein organisches Polymer enthält und weiterhin einen organischen oder bevorzugt anorganischen Feststoff in partikulärer Form und mindestens einen Emulgator der allgemeinen Formel I oder II und anschließend eine weitere Behandlung mit einer neuen wässrigen Flotte anschließt, die ein anderes organisches Polymer und mindestens einen Emulgator der allgemeinen Formel I oder II enthält, aber keinen weiteren organischen oder anorganischen Feststoff in partikulärer Form.

In einer bevorzugten Ausführungsform der vorliegenden Erfindung führt man das erfindungsgemäße Verfahren so durch, dass man das zu behandelnde Textil zunächst mit einer wässrigen Flotte behandelt, die mindestens ein organisches Polymer enthält und weiterhin einen organischen oder bevorzugt anorganischen Feststoff in partikulärer Form und mindestens einen Emulgator der allgemeinen Formel I oder II und anschließend eine weitere Behandlung mit einer neuen wässrigen Flotte anschließt, die kein weiteres Polymer enthält, aber den bereits im ersten Schritt eingesetzten anorganischen Feststoff in partikulärer Form und mindestens einen Emulgator der allgemeinen Formel I oder II.

Die Temperatur zur Durchführung des erfindungsgemäßen Verfahrens ist an sich unkritisch. Die Flottentemperatur liegt kann im Bereich von 10 bis 80°C liegen, bevorzugt 15 bis 50°C.

Das erfindungsgemäße Verfahren kann mit gängigen Maschinen durchgeführt werden, die für die Ausrüstung von saugfähigen Materialien und insbesondere Textilien eingesetzt werden, beispielsweise mit einem oder mehreren Foulards. Bevorzugt sind Foulards mit senkrechtem Textileinzug, die als wesentliches Element zwei aufeinandergepresste Rollen enthalten, durch die Textil geführt wird. Oberhalb der Rollen ist die Flüssigkeit eingefüllt und benetzt Textil. Durch den Druck wird Textil abgequetscht und ein konstanter Auftrag gewährleistet.

In einer speziellen Ausführungsform der vorliegenden Erfindung setzt man einen Foulard ein, den man mit einem Textileinzug im Bereich von 1 bis 40 m/min, bevorzugt bis 30 m/min betreibt.

Die Flottenaufnahme kann man so wählen, dass durch das erfindungsgemäße Verfahren eine Flottenaufnahme von 25 Gew.-% bis 85 Gew.-%, bevorzugt 40 bis 70 Gew.-% resultiert.

In einer speziellen Ausführungsform der vorliegenden Erfindung kombiniert man Schaumauftrag von wässriger Flotte mit einem Foulard. In einer anderen Ausführungsform der vorliegenden Erfindung kombiniert man einen Rakelauftrag von wässriger Flotte mit einem Foulard. In einer anderen Ausführungsform der vorliegenden Erfindung kombiniert man einen Sprühauftrag von wässriger Flotte mit einem Foulard. In einer weiteren Ausführungsform der vorliegenden Erfindung kombiniert man einen Walzenauftrag von wässriger Flotte mit einem Foulard.

Im Anschluss an die erfindungsgemäße Behandlung kann man das behandelte saugfähige Material und insbesondere Textil nach in der Textilindustrie üblichen Methoden trocknen.

Im Anschluss an die erfindungsgemäße Behandlung kann man tempern, und zwar kontinuierlich oder diskontinuierlich. Die Dauer der Temperung kann man in weiten Grenzen wählen. Üblicherweise kann man über die Dauer von etwa 10 Sekunden bis etwa 30 Minuten, insbesondere 30 Sekunden bis 5 Minuten tempern. Zur Durchführung einer Temperung erhitzt man auf Temperaturen von bis zu 180°C, bevorzugt bis zu 150°C. Natürlich ist es erforderlich, die Temperatur der Temperung an die Empfindlichkeit des Gewebes anzupassen.

Geeignete Methode zur Temperung ist beispielsweise eine Heißlufttrocknung. Eine andere geeignete Methode zur Temperung bedient sich eines oder mehrerer IR-Strahler.

In einer Ausführungsform der vorliegenden Erfindung versieht man zu behandelndes saugfähiges Material und insbesondere Textil vor der erfindungsgemäßen Behandlung mit einer Haftschicht. Dazu kann man einen sogenannten Primer einsetzen. Die Aufbringung eines Primers ist bevorzugt, wenn man Synthesefasern auszurüsten wünscht.

In einer Ausführungsform der vorliegenden Erfindung lässt sich als Haftschicht beispielsweise ein oder mehrere Polymere auf zu behandelndes saugfähiges Material und insbesondere Textil aufbringen, wobei die Polymersynthese auch auf dem saugfähigen Material und insbesondere Textil durchgeführt werden kann. Besonders gut geeignete Polymere sind solche Polymere, die vernetzte oder zur Vernetzung fähige Gruppen aufweisen, beispielsweise natürliche oder synthetische Polymeren mit freien Hydroxylgruppen, Carbonylgruppen, primären oder sekundären Aminogruppen oder Thiolgruppen. Beispiele für gut geeignete Polymere sind Lignin, Polysaccharide, Polyvinylalkohol und Polyethylenimin. Eine Vernetzung kann beispielsweise durch anschließende Umsetzung mit beispielsweise Isocyanaten, Dimethylolharnstoff oder N,N-Dimethylol-4,5-Dihydroxyethylenharnstoff (DMDHEU) gelingen. Andere besonders bevorzugte Vernetzer sind Melamin-Formaldehyd-Harze, die mit Methanol verethert sein können.

In einer anderen Ausführungsform werden bei zu behandelnden Polyestern oder Polyamiden durch partielle Verseifung mit starken Alkalien wie wässriger Natronlauge oder Kalilauge 0,01 bis 1 Gew.-%, bevorzugt 0,1 bis 0,5 Gew.-% des Textils verseift.

Ein weiterer Gegenstand der vorliegenden Erfindung sind saugfähige Materialien und insbesondere Textil, ausgerüstet nach dem erfindungsgemäßen Verfahren. Durch das erfindungsgemäße Ausrüsten werden die erfindungsgemäßen saugfähigen Materialien und insbesondere Textilien mit einer oder mehreren Schichten versehen. Die erfindungsgemäßen saugfähigen Materialien und insbesondere Textilien zeigen besonders gutes Schmutz und Wasser abweisendes Verhalten. Weiterhin zeigen erfindungsgemäße saugfähige Materialien und insbesondere Textilien sehr gute mechanische Belastbarkeit. In erfindungsgemäß beschichteten saugfähigen Materialien und insbesondere Textilien ist der oder sind die eingesetzten Feststoffe vorzugsweise isotrop oder weitgehend isotrop über die Ausrüstungsschicht verteilt, d.h. man stellt keine Konzentrationsdifferenz in der Grenzschicht zwischen Ausrüstungsschicht und umgebender Atmosphäre fest.

In einer Ausführungsform enthalten erfindungsgemäße saugfähige Materialien und insbesondere Textilien 0,5 bis 50 g/m² Schicht, bevorzugt 1 bis 20 g/m² und besonders bevorzugt 1,5 bis 17 g/m².

Ein weiterer Gegenstand der vorliegenden Erfindung sind wässrigen Flotten, enthaltend mindestens ein organisches Polymer gewählt aus Polymeren und Copolymeren von ethylenisch ungesättigten hydrophoben Monomeren, die in Wasser eine Löslichkeit von weniger als 1 g/l haben, bestimmt bei 25°C,
und mindestens einen organischen oder anorganischen Feststoff in partikulärer Form gewählt aus Polyethylen, Polypropylen, Polyisobutylen und Polystyrol sowie Copolymere derselben miteinander oder mit einem oder mehreren weiteren Olefinen und festen anorganischen Oxiden, Carbonaten, Phosphaten, Silikaten oder Sulfaten der Gruppe 3 bis 14 des Periodensystems der Elemente,
und mindestens einen Emulgator, gewählt aus Emulgatoren der allgemeinen Formel **I** 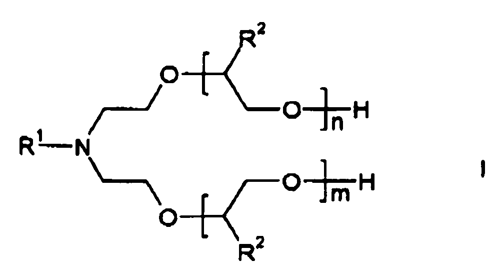 und II, 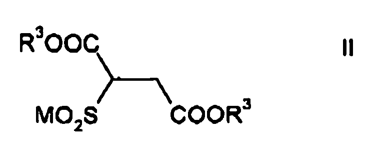 wobei die Variablen wie vorstehend definiert sind. Die erfindungsgemäßen Flotten eignen sich beispielsweise zur Ausrüstung von saugfähigen Materialien und insbesondere von Textilien.

Die erfindungsgemäßen Flotten können weitere Komponenten enthalten, beispielsweise ein oder mehrere organische Lösemittel.

Ein weiterer Gegenstand der vorliegenden Erfindung ist die Verwendung der erfindungsgemäßen Flotten zur Ausrüstung von saugfähigen Materialien und insbesondere Textil.

Ein weiterer Gegenstand der vorliegenden Erfindung ist ein Verfahren zur Herstellung wässriger Flotten, im Folgenden auch erfindungsgemäßes Herstellungsverfahren genannt. Das erfindungsgemäße Herstellungsverfahren umfasst das Vermischen der folgenden Komponenten:
mindestens ein organisches Polymer gewählt aus Polymeren und Copolymeren von ethylenisch ungesättigten hydrophoben Monomeren, die in Wasser eine Löslichkeit von weniger als 1 g/l haben, bestimmt bei 25°C,
mindestens einen organischen oder anorganischen Feststoff in partikulärer Form gewählt aus Polyethylen, Polypropylen, Polyisobutylen und Polystyrol sowie Copolymere derselben miteinander oder mit einem oder mehreren weiteren Olefinen und festen anorganischen Oxiden, Carbonaten, Phosphaten, Silikaten oder Sulfaten der Gruppe 3 bis 14 des Periodensystems der Elemente,
Wasser und einen oder mehrere Emulgatoren der allgemeinen Formel I oder II, und gegebenenfalls ein oder mehrere organische Lösemittel.

Das erfindungsgemäße Herstellungsverfahren kann man üblicherweise bei Temperaturen von Raumtemperatur bis etwa 100°C durchführen, wobei Raumtemperatur bevorzugt ist.

Das erfindungsgemäße Herstellungsverfahren umfasst in der Regel einen Homogenisierschritt, beispielsweise durch mechanisches oder pneumatisches Rühren, Schütteln, Ultraschallbehandlung oder eine Kombination derselben. In einigen Fällen kann man jedoch auf den Homogenisierschritt verzichten.

Die Reihenfolge der Zugabe der Komponenten kann im Prinzip beliebig gewählt werden. So kann man beispielsweise zunächst eine wasser- und lösemittelfreie Mischung aus Polymer und organischem oder anorganischem Feststoff herstellen und anschließend die trockene Mischung in organischem Lösemittel oder Gemisch aus Wasser und organischem Lösemittel und Emulgator der allgemeinen Formel I oder II oder in Wasser und Emulgator der allgemeinen Formel I oder II dispergieren.

In einer Ausführungsform des erfindungsgemäßen Herstellungsverfahrens stellt man zunächst Formulierungen her, die organisches Polymer, organischen oder anorganischen Feststoff in partikulärer Form, einen oder mehrere Emulgatoren der allgemeinen Formel I oder II sowie gegebenenfalls Wasser und gegebenenfalls einen oder mehrere organische Lösemittel enthalten. Vor der Durchführung der erfindungsgemäßen Behandlung von saugfähigen Materialien stellt man dann eine erfindungsgemäße Flotte her, indem man erfindungsgemäße Formulierung mit Wasser und gegebenenfalls weiterem organischem Lösungsmittel verdünnt. Es ist bevorzugt, dass die erfindungsgemäßen Formulierungen maximal 15 Gew.-%, bevorzugt etwa 0,1 bis 10 Gew.-%, besonders bevorzugt bis 5 Gew.-% Wasser enthalten. Erfindungsgemäße Formulierungen können auch wasserfrei sein.

Ein weiterer Gegenstand der vorliegenden Erfindung sind Formulierungen, die organisches Polymer, organischen oder anorganischen Feststoff in partikulärer Form, einen oder mehrere Emulgatoren der allgemeinen Formel I oder II sowie gegebenenfalls Wasser und gegebenenfalls ein oder mehrere organische Lösemittel enthalten, wobei der Anteil an Wasser etwa 0,1 bis 10 Gew.-%, bevorzugt bis 5 Gew.-% betragen kann. Erfindungsgemäße Formulierungen eignen sich besonders gut zur Herstellung von erfindungsgemäßen wässrigen Flotten.

Die Erfindung wird durch Beispiele erläutert.

### Beispiel 1: Herstellung von erfindungsgemäßen wässrigen Flotten

### Beispiel 1.1: Herstellung der erfindungsgemäßen wässrigen Flotte 1.1

In einem Kolben wurden unter mechanischem Rühren gemischt:
872,8 g destilliertes Wasser,
68,1 g einer wässrigen Dispersion (20 Gew.-% Feststoffgehalt) eines statistischen Copolymeren aus 10 Gew.-% Methacrylsäure und 90 Gew.-% CH₂=C(CH₃)COO-CH₂-CH₂-n-C₆F₁₃ mit Mₙ 3000 g/mol (Gelpermeationschromatographie),
86,5 g einer wässrigen Dispersion (20 Gew.-% Feststoffgehalt) eines statistischen Copolymers aus 20 Gew.-% Acrylsäure, 80 Gew.-% Ethylen, M_{w}: 20.000 g/mol, neutralisiert mit N,N-Dimethylethanolamin, pH-Wert zwischen 8,5 und 9,5.
Anschließend wurden 12,8 g mit Dimethylsiloxangruppen modifizierte pyrogene Kieselsäure mit einer BET-Oberfläche von 225 m²/g, bestimmt nach DIN 66131 zugegeben, Primärpartikelgröße: 10 nm (Medianwert, Zahlenmittel), und
8,8 g Amin der Formel I.1 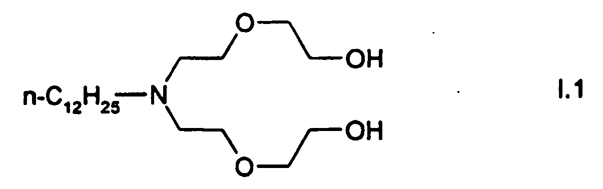 neutralisiert mit 32 Gew.-% wässriger HCl, zugegeben und 10 Minuten dispergiert (Ultraturrax-Rührer). Man erhielt die erfindungsgemäße wässrige Flotte 1.1, die einen pH-Wert von 7,5 hatte.

### Beispiel 1.2: Herstellung der erfindungsgemäßen wässrigen Flotte 1.2

In einem Kolben wurden unter mechanischem Rühren gemischt:
872,8 g destilliertes Wasser,
68,1 g einer wässrigen Dispersion (20 Gew.-% Feststoffgehalt) eines statistischen Copolymeren aus 10 Gew.-% Methacrylsäure und 90 Gew.-% CH₂=C(CH₃)COO-CH₂-CH₂-n-C₆F₁₃ mit Mₙ 3000 g/mol (Gelpermeationschromatographie),
86,5 g einer wässrigen Dispersion (20 Gew.-% Feststoffgehalt) eines statistischen Copolymers aus 20 Gew.-% Acrylsäure, 80 Gew.-% Ethylen, M_{w}: 20.000 g/mol, neutralisiert mit N,N-Dimethylethanolamin, pH-Wert zwischen 8,5 und 9,5.
Anschließend wurden 12,8 g mit Dimethylsiloxangruppen modifizierte pyrogene Kieselsäure mit einer BET-Oberfläche von 225 m²/g, bestimmt nach DIN 66131 zugegeben, Primärpartikelgröße: 10 nm (Medianwert, Zahlenmittel), und
8,8 g Amin der Formel 1.2 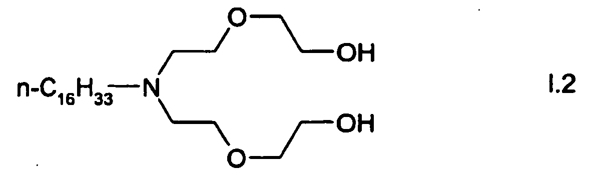 neutralisiert mit 32 Gew.-% wässriger HCl, zugegeben und 10 Minuten dispergiert (Ultraturrax-Rührer). Man erhielt die erfindungsgemäße wässrige Flotte 1.2, die einen pH-Wert von 7,5 hatte.

### Beispiel 1.3: Herstellung der erfindungsgemäßen wässrigen Flotte 1.3

In einem Kolben wurden unter mechanischem Rühren gemischt:
872,8 g destilliertes Wasser,
68,1 g einer wässrigen Dispersion (20 Gew.-% Feststoffgehalt) eines statistischen Copolymeren aus 10 Gew.-% Methacrylsäure und 90 Gew.-% CH₂=C(CH₃)COO-CH₂-CH₂-n-C₆F₁₃ mit Mₙ 3000 g/mol (Gelpermeationschromatographie),
In einem Kolben wurden unter mechanischem Rühren gemischt 872,8 g destilliertes Wasser,
68,1 g einer wässrigen Dispersion (20 Gew.-% Feststoffgehalt) eines statistischen Copolymeren aus 10 Gew.-% Methacrylsäure und 90 Gew.-% CH₂=C(CH₃)COO-CH₂-CH₂-n-C₈F₁₃ mit Mₙ 3000 g/mol (Gelpermeationschromatographie),
86,5 g einer wässrigen Dispersion (20 Gew.-% Feststoffgehalt) eines statistischen Copolymers aus 20 Gew.-% Acrylsäure, 80 Gew.-% Ethylen, M_{w}: 20.000 g/mol, neutralisiert mit N,N-Dimethylethanolamin, pH-Wert zwischen 8,5 und 9,5.
Anschließend wurden 12,8 g mit Dimethylsiloxangruppen modifizierte pyrogene Kieselsäure mit einer BET-Oberfläche von 225 m²/g, bestimmt nach DIN 66131 zugegeben, Primärpartikelgröße: 10 nm (Medianwert, Zahlenmittel), und
8,8 g Amin der Formel I.3 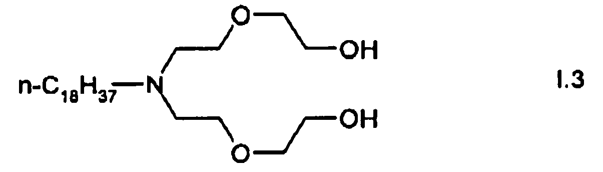 neutralisiert mit 32 Gew.-% wässriger HCl, zugegeben und 10 Minuten dispergiert (Ultraturrax-Rührer). Man erhielt die erfindungsgemäße wässrige Flotte 1.3, die einen pH-Wert von 7,5 hatte.

### Beispiel 2 Ausrüstung von Textil

### Beispiel 2.1. Behandlung mit erfindungsgemäßer wässriger Flotte 1.1

### Beispiel 2.1.1. Behandlung von Polyester

Ein Polyestergewebe mit einem Flächengewicht von 220 g/m² wurde mit Flotte 1.1 auf einem Foulard (Hersteller Fa. Mathis, Typ Nr. HVF12085) behandelt. Der Anpressdruck der Walzen betrug 2,6 bar. Es resultierte eine Flottenaufnahme von 60%. Die Auftraggeschwindigkeit betrug 2 m/min. Anschließend wurde das behandelte Polyestergewebe bei 120°C auf einem Spannrahmen getrocknet. Die abschließende Temperung erfolgte über einen Zeitraum von 3 min bei 150°C unter Umluft. Man erhielt das erfindungsgemäße behandelte Polyestergewebe 2.1.1.

### Beispiel 2.1.2.Behandlung von Polyamid

Ein Polyamidgewebe mit einem Flächengewicht von 160 g/m² wurde mit Flotte 1.1 auf einem Foulard (Hersteller Fa. Mathis, Typ Nr. HVF12085) behandelt. Der Anpressdruck der Walzen betrug 2,6 bar. Es resultierte eine Flottenaufnahme von 65%. Die Auftraggeschwindigkeit betrug 2 m/min. Anschließend wurde das behandelte Polyamidgewebe bei 120°C auf einem Spannrahmen getrocknet. Die abschließende Temperung erfolgte über einen Zeitraum von 3 min bei 150°C unter Umluft. Man erhielt das erfindungsgemäße behandelte Polyamidgewebe 2.1.2. rung erfolgte über einen Zeitraum von 3 min bei 150°C unter Umluft. Man erhielt das erfindungsgemäße behandelte Polyacrylgewebe 2.1.3.

### Beispiele 2.2.1 bis 2.2.3 und 2.3.1 bis 2.3.3

Es wurde jeweils wie unter 2.1.1 bis 2.1.3 beschrieben vorgegangen, jedoch wurde erfindungsgemäße wässrige Flotte 1.1 in den Beispielen 2.2.1 bis 2.2.3 durch erfindungsgemäße wässrige Flotte 1.2 und in den Beispielen 2.3.1 bis 2.3.3 durch erfindungsgemäße wässrige Flotte 1.3 ersetzt.

### 3. Untersuchung der erfindungsgemäß behandelten Textilproben auf Wasser abweisende Wirkung

Die zu untersuchende erfindungsgemäß behandelte Textilprobe wurde manuell gespannt und mit Nadeln auf einem ebenen Holzbrett fixiert, dessen Neigung stufenlos von 1° bis 90° eingestellt werden konnte. Dann ließ man mit Hilfe einer Kanüle aus einer Höhe von 10 mm einzelne Wassertropfen auf die Textilprobe fallen. Die Tropfen hatten eine Masse von 4,7 mg. Durch schrittweises Senken des Neigungswinkels wurde der Neigungswinkel bestimmt, bei dem die Tropfen gerade noch abperlten und keine Adhäsion zu beobachten war. Die Ergebnisse finden sich in Tabelle 1.

Die Wasseraufnahme wurde nach Bundesmann, DIN 53888, geprüft.

**Tabelle 1: Neigungswinkel**

| Textilprobe Nr. | Neigungswinkel [°] | Wasseraufnahme |
|---|---|---|
| 2.1.1 | 7 | < 20 Gew.-% |
| 2.1.2 | 9 | < 20 Gew.-% |
| 2.1.3 | 6 | < 20 Gew.-% |
| 2.2.1 | 8 | < 20 Gew.-% |
| 2.2.2 | 7 | < 20 Gew.-% |
| 2.2.3 | 7 | < 20 Gew.-% |
| 2.3.1 | 5 | < 20 Gew.-% |
| 2.3.2 | 7 | < 20 Gew.-% |
| 2.3.3 | 6 | < 20 Gew.-% |

Die erfindungsgemäßen Textilproben (Polyester, Polyamid, Polyacryl) wiesen jeweils vorzügliche mechanische Stabilität auf. Zur Überprüfung werden sie jeweils 2000 mal auf und abgerollt und der Neigungswinkel erneut bestimmt. Gegenüber Tab. 1 hatten sich die Neigungswinkel nicht verändert.

## Patentansprüche

1. Verfahren zur Ausrüstung von saugfähigen Materialien durch Behandlung mit mindestens einer wässrigen Flotte, die
mindestens ein organisches Polymer enthält, gewählt aus Polymeren und Copolymeren von ethylenisch ungesättigten hydrophoben Monomeren, die in Wasser eine Löslichkeit von weniger als 1 g/l haben, bestimmt bei 25°C,
mindestens einen organischen oder anorganischen Feststoff in partikulärer Form, gewählt aus Polyethylen, Polypropylen, Polyisobutylen und Polystyrol sowie Copolymere derselben miteinander oder mit einem oder mehreren weiteren Olefinen und festen anorganischen Oxiden, Carbonaten, Phosphaten, Silikaten oder Sulfaten der Gruppe 3 bis 14 des Periodensystems der Elemente
und mindestens einen Emulgator, gewählt aus Emulgatoren der allgemeinen Formel I 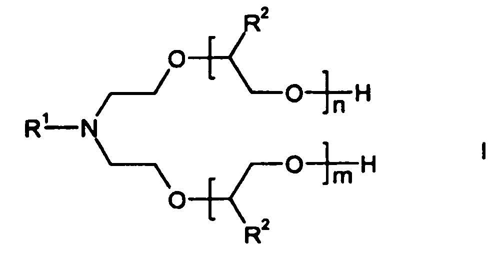 und II, 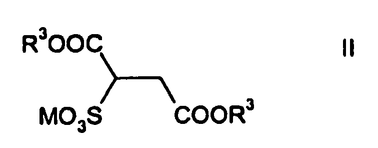 wobei die Variablen wie folgt definiert sind:
R¹ gewählt aus C₆-C₄₀-Alkyl und C₃-C₄₀-Alkenyl mit einer bis fünf C-C-Doppelbindungen,
R² gleich oder verschieden und gewählt aus Wasserstoff und Methyl,
m, n gleich oder verschieden und gewählt aus ganzen Zahlen im Bereich von 0 bis 10,
R³ gleich oder verschieden und gewählt aus Wasserstoff und C₆-C₂₀-Alkyl,
M Alkalimetall oder Ammonium.

2. Verfahren nach Anspruch 1, **dadurch gekennzeichnet, dass** der oder mindestens einer der organischen oder anorganischen Feststoffe hydrophob ist.

3. Verfahren nach einem der Ansprüche 1 oder 2, **dadurch gekennzeichnet, dass** man die Oberfläche von saugfähigem Material vor der Behandlung mit einer Haftschicht versieht.

4. Verfahren nach einem der Ansprüche 1 bis 3, **dadurch gekennzeichnet, dass** es sich bei dem oder den Feststoffen um einen oder mehrere anorganische Feststoffe handelt.

5. Verfahren nach einem der Ansprüche 1 bis 4, **dadurch gekennzeichnet, dass** der oder die organischen oder anorganischen Feststoffe in der Flotte in einem Anteil von mindestens 5,5 g/l vorliegen.

6. Verfahren nach einem der Ansprüche 1 bis 5, **dadurch gekennzeichnet, dass** der oder die organischen oder anorganischen Feststoffe einen Partikeldurchmesser (Medianwert, Zahlenmittel) im Bereich von 10 bis 1000 nm aufweisen.

7. Verfahren nach einem der Ansprüche 1 bis 6, **dadurch gekennzeichnet, dass** es sich bei saugfähigen Materialien um textile Materialien handelt.

8. Saugfähige Materialien, ausgerüstet nach einem Verfahren gemäß der Ansprüche 1 bis 7.

9. Wässrige Flotten, enthaltend
mindestens ein organisches Polymer, gewählt aus Polymeren und Copolymeren von ethylenisch ungesättigten hydrophoben Monomeren, die in Wasser eine Löslichkeit von weniger als 1 g/l haben, bestimmt bei 25 °C
mindestens einen organischen oder anorganischen Feststoff in partikulärer Form, gewählt aus Polyethylen, Polypropylen, Polyisobutylen und Polystyrol sowie Copolymere derselben miteinander oder mit einem oder mehreren weiteren Olefinen und festen anorganischen Oxiden, Carbonaten, Phosphaten, Silikaten oder Sulfaten der Gruppe 3 bis 14 des Periodensystems der Elemente
und
mindestens einen Emulgator, gewählt aus Emulgatoren der allgemeinen Formel I 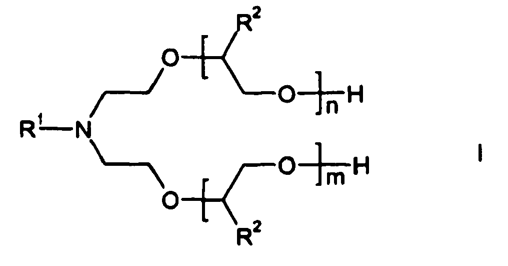 und II, 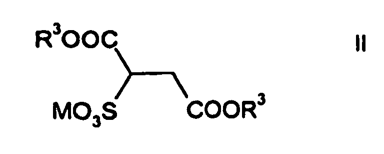 wobei die Variablen wie folgt definiert sind:
R¹ gewählt aus C₆-C₄₀-Alkyl und C₃-C₄₀-Alkenyl mit einer bis fünf C-C-Doppelbindungen,
R² gleich oder verschieden und gewählt aus Wasserstoff und Methyl,
m, n gleich oder verschieden und gewählt aus ganzen Zahlen im Bereich von 0 bis 10,
R³ gleich oder verschieden und gewählt aus Wasserstoff und C₆-C₂₀-Alkyl,
M Alkalimetall oder Ammonium.

10. Verwendung von wässrigen Flotten nach Anspruch 9 zur Ausrüstung von saugfähigen Materialien.

11. Verfahren zur Herstellung von wässrigen Flotten nach Anspruch 9 durch Vermischen der folgenden Komponenten:
mindestens eines organischen Polymers,
mindestens eines organischen oder anorganischen Feststoffs in partikulärer Form, Wasser und
mindestens eines Emulgators, gewählt aus Emulgatoren der allgemeinen Formel I und II.

12. Verwendung von Formulierungen zur Herstellung von wässrigen Flotten nach Anspruch 9, **dadurch gekennzeichnet, dass** die Formulierungen organisches Polymer, organischen oder anorganischen Feststoff in partikulärer Form, einen oder mehrere Emulgatoren der allgemeinen Formel I oder II und gegebenenfalls ein oder mehrere organische Lösemittel sowie gegebenenfalls Wasser enthalten und der Anteil an Wasser maximal 15 Gew.-% beträgt, bezogen auf sämtliche bei Zimmertemperatur flüssigen Anteile an Formulierung.

13. Formulierungen, enthaltend organisches Polymer, organischen oder anorganischen Feststoff in partikulärer Form, ein oder mehrere Emulgatoren der allgemeinen Formel I oder II und gegebenenfalls einen oder mehrere organische Lösemittel sowie gegebenenfalls Wasser, wobei der Anteil an Wasser maximal 15 Gew.-% beträgt.

## Claims

1. A process for finishing absorbent materials by treatment with
at least one aqueous liquor comprising
at least one organic polymer selected from polymers and copolymers of ethylenically unsaturated hydrophobic monomers which have a 25°C solubility in water of less than 1 g/l,
at least one organic or inorganic solid in particulate form selected from polyethylene, polypropylene, polyisobutylene and polystyrene and also copolymers thereof with each other or with one or more further olefins and solid inorganic oxides, carbonates, phosphates, silicates or sulfates of groups 3 to 14 of the periodic table,
and at least one emulsifier selected from emulsifiers of the general formula I 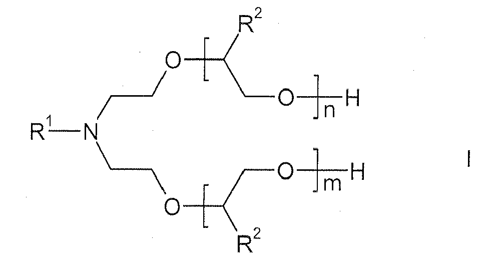 and II, 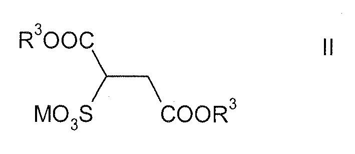 where:
R¹ is selected from C₆-C₄₀-alkyl and C₃-C₄₀-alkenyl having one to five C-C double bonds,
R² is at each instance the same or different and selected from hydrogen and methyl,
m and n are the same or different and each selected from integers in the range from 0 to 10,
R³ is at each instance the same or different and selected from hydrogen and C₆-C₂₀-alkyl,
M is an alkali metal or ammonium.

2. The process according to claim 1 wherein the or at least one of the organic or inorganic solids is hydrophobic.

3. The process according to claim 1 or claim 2 wherein the absorbent material surface is provided with a bonding layer prior to said treatment.

4. The process according to any of claims 1 to 3 wherein the solid or solids is or are one or more inorganic solids.

5. The process according to any of claims 1 to 4 wherein the organic or inorganic solid or solids are present in the liquor in a fraction of at least 5.5 g/l.

6. The process according to any of claims 1 to 5 wherein the organic or inorganic solid or solids have a particle diameter (median value, number average) in the range from 10 to 1000 nm.

7. The process according to any of claims 1 to 6 wherein the absorbent materials are textile materials.

8. Absorbent materials finished by a process according to claims 1 to 7.

9. Aqueous liquors comprising
at least one organic polymer selected from polymers and copolymers of ethylenically unsaturated hydrophobic monomers which have a 25°C solubility in water of less than 1 g/l,
at least one organic or inorganic solid in particulate form selected from polyethylene, polypropylene, polyisobutylene and polystyrene and also copolymers thereof with each other or with one or more further olefins and solid inorganic oxides, carbonates, phosphates, silicates or sulfates of groups 3 to 14 of the periodic table,
and at least one emulsifier selected from emulsifiers of the general formula I 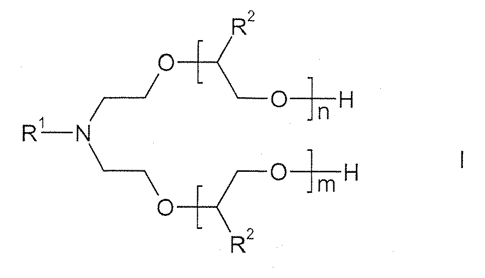 and II, 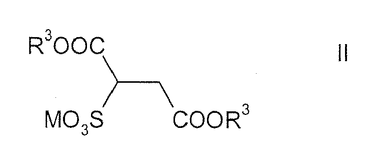 where:
R¹ is selected from C₆-C₄₀-alkyl and C₃-C₄₀-alkenyl having one to five C-C double bonds,
R² is at each instance the same or different and selected from hydrogen and methyl,
m and n are the same or different and each selected from integers in the range from 0 to 10,
R³ is at each instance the same or different and selected from hydrogen and C₆-C₂₀-alkyl,
M is an alkali metal or ammonium.

10. The use of aqueous liquors according to claim 9 for finishing absorbent materials.

11. A process for producing aqueous liquors according to claim 9 by mixing the following components:
at least one organic polymer,
at least one organic or inorganic solid in particulate form, water, and
at least one emulsifier selected from emulsifiers of the general formula I and II.

12. The use of formulations for producing aqueous liquors according to claim 9 wherein the formulations comprise organic polymer, organic or inorganic solid material in particulate form, one or more emulsifiers of the general formula I or II and if appropriate one or more organic solvents and also if appropriate water and the water fraction is not more than 15% by weight, based on all fractions of the formulation which are liquid at room temperature.

13. Formulations comprising organic polymer, organic or inorganic solid material in particulate form, one or more emulsifiers of the general formula I or II and if appropriate one or more organic solvents and also if appropriate water, wherein the water fraction is not more than 15% by weight.

## Revendications

1. Procédé pour apprêter des matériaux absorbants au moyen d'un traitement à l'aide d'au moins un bain aqueux, qui continent :
au moins un polymère organique, choisi parmi des polymères et des copolymères obtenus à partir de monomères hydrophobes à insaturation éthylénique, qui présentent une solubilité dans l'eau inférieure à 1 g/l, déterminée à 25 °C,
au moins un solide organique ou inorganique sous forme particulaire, choisi parmi le polyéthylène, le polypropylène, le polyisobutylène et le polystyrène, ainsi que des copolymères de ceux-ci les uns avec les autres ou avec une ou plusieurs autres oléfines, et des oxydes, des carbonates, des phosphates, des silicates ou des sulfates inorganiques solides, issus des groupes 3 à 14 du système périodique des éléments,
et au moins un émulsionnant, choisi parmi les émulsionnants de formules générales I : 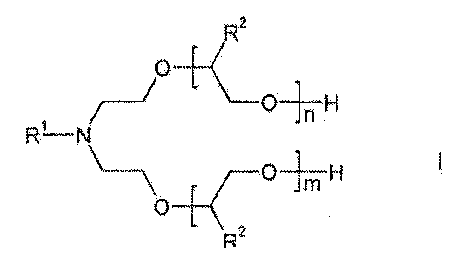
et II : 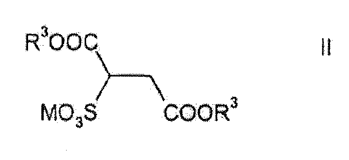 dans lesquelles les variables sont définies de la manière suivants :
R¹ est choisi parmi un alkyle en C₆-C₄₀ et un alcényle en C₃-C₄₀ ayant une à cinq doubles liaisons C-C,
R² représente un radical identique ou différent et est choisi parmi l'hydrogène et un méthyle,
m, n sont identiques ou différents et sont choisis parmi des nombres entiers compris dans la plage de 0 à 10,
R³ représente un radical identique ou différent et est choisi parmi l'hydrogène et un alkyle en C₆-C₂₀, et
M représente un métal alcalin ou l'ammonium.

2. Procédé selon la revendication 1, **caractérisé en ce que** le ou au moins l'un des solides organiques ou inorganiques est hydrophobe.

3. Procédé selon l'une quelconque des revendications 1 ou 2, **caractérisé en ce que** la surface du matériau absorbant est dotée d'une couche adhésive avant de procéder au traitement.

4. Procédé selon l'une quelconque des revendications 1 à 3, **caractérisé en ce que** le ou les solides sont un ou plusieurs solides inorganiques.

5. Procédé selon l'une quelconque des revendications 1 à 4, **caractérisé en ce que** le ou les solides organiques ou inorganiques contenus dans le bain représentent une fraction d'au moins 5,5 g/l.

6. Procédé selon l'une quelconque des revendications 1 à 5, **caractérisé en ce que** le ou les solides organiques ou inorganiques présentent un diamètre particulaire (valeur moyenne, moyenne numérique) dans la plage de 10 à 1000 nm.

7. Procédé selon l'une quelconque des revendications 1 à 6, **caractérisé en ce que** les matériaux absorbants sont des matériaux textiles.

8. Matériaux absorbants, apprêtés selon un procédé répondant aux revendications 1 à 7.

9. Bains aqueux, contenant :
au moins un polymère organique, choisi parmi des polymères et des copolymères obtenus à partir de monomères hydrophobes à insaturation éthylénique, qui présentent une solubilité dans l'eau inférieure à 1 g/l, déterminée à 25 °C,
au moins un solide organique ou inorganique sous forme particulaire, choisi parmi le polyéthylène, le polypropylène, le polyisobutylène et le polystyrène, ainsi que des copolymères de ceux-ci les uns avec les autres ou avec une ou plusieurs autres oléfines, et des oxydes, des carbonates, des phosphates, des silicates ou des sulfates inorganiques solides, issus des groupes 3 à 14 du système périodique des éléments,
et
au moins un émulsionnant, choisi parmi des émulsionnants répondant aux formules générales I : 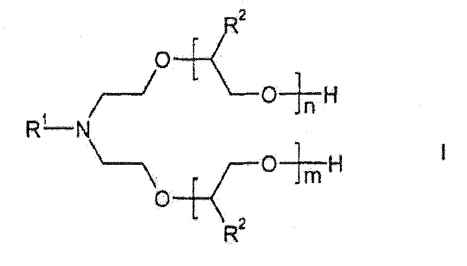 et II : 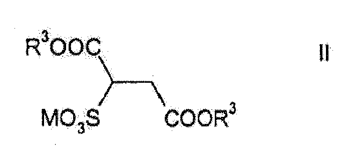 dans lesquelles les variables sont définies de la manière suivants :
R¹ est choisi parmi un alkyle en C₆-C₄₀ et un alcényle en C₃-C₄₀ contenant une à cinq doubles liaisons C-C,
R² représente un radical identique ou différent et est choisi parmi l'hydrogène et un méthyle,
m, n sont identiques ou différents et sont choisis parmi des nombres entiers compris dans la plage de 0 à 10,
R³ représente un radical identique ou différent et est choisi parmi l'hydrogène et un alkyle en C₆-C₂₀, et
M représente un métal alcalin ou l'ammonium.

10. Utilisation de bains aqueux selon la revendication 9, pour apprêter des matériaux absorbants.

11. Procédé de fabrication de bains aqueux selon la revendication 9 par mélange des composants suivantes :
au moins un polymère organique,
au moins un solide organique ou inorganique sous forme particulaire, de l'eau, et
au moins un émulsionnant, choisi parmi les émulsionnants répondant aux formules générales I et II.

12. Utilisation de formulations pour la fabrication de bains aqueux selon la revendication 9, **caractérisée en ce que** les formulations contiennent un polymère organique, un solide organique ou inorganique sous forme particulaire, un ou plusieurs émulsionnants répondant à la formule générale I ou II et, éventuellement, un ou plusieurs solvants organiques, ainsi que, éventuellement, de l'eau, et **en ce que** la fraction d'eau représente au maximum 15 % en poids, sur la base de la totalité de la fraction de formulation qui se trouve à l'état liquide à température ambiante.

13. Formulations, contenant un polymère organique, un solide organique ou inorganique sous forme particulaire, un ou plusieurs émulsionnants répondant à la formule générale I ou II et, éventuellement, un ou plusieurs solvants organiques, ainsi que, éventuellement, de l'eau, la fraction d'eau représentant au maximum 15 % en poids.
